Europäisches Patentamt

European Patent Office

Office européen des brevets

(11) Veröffentlichungsnummer: **0 443 160 A2**

# EUROPÄISCHE PATENTANMELDUNG

(21) Anmeldenummer: 90124618.1

(51) Int. Cl.⁵: **B41F 5/24**

(22) Anmeldetag: 18.12.90

(30) Priorität: 22.02.90 DE 4005681

(43) Veröffentlichungstag der Anmeldung:
28.08.91 Patentblatt 91/35

(84) Benannte Vertragsstaaten:
CH DE DK FR GB IT LI

(71) Anmelder: Windmöller & Hölscher
Münsterstrasse 50
W-4540 Lengerich(DE)

(72) Erfinder: **Schneider, Horst**
**Hölderlinstrasse 21**
**W-4540 Lengerich(DE)**

(74) Vertreter: **Gossel, Hans K., Dipl.-Ing.**
**Lorenz-Seidler-Gossel et al**
**Widenmayerstrasse 23**
**W-8000 München 22(DE)**

(54) Vorrichtung zum Ausführen einer Schnellverstellung von Maschinenteilen oder dergleichen.

(57) Die Erfindung betrifft eine Vorrichtung zum Ausführen einer Schnellverstellung von Maschinenteilen o.dgl. mit einer mit dem zu verstellenden Maschinenteil oder dem Gestell drehfest verbundenen Spindel, die in eine Spindelmutter eingeschraubt ist, die an dem Gestell oder dem zu verstellenden Maschinenteil drehbar aber axial unverschieblich gelagert und als Schneckenrad ausgebildet ist, mit dem eine Schnecke kämmt, deren Welle mit einer Betätigungseinrichtung zu deren Verdrehen versehen ist. Zur Lösung der Aufgabe, eine Vorrichtung dieser Gattung zu schaffen, die mühelos eine schnelle Verstellung der Maschinenteile gestattet, ist die Schneckenwelle (18) drehbar und axial verschieblich in dem das Schneckenrad (10) lagernden Gehäuse (7) oder Gehäuseteil und zusätzlich drehbar aber axial unverschieblich in einem in oder an dem Gehäuse (7, 20) in axialer Richtung der Schneckenwelle (18) verschieblich geführten Schieber (27) gelagert, der von einer Druckmittel-Kolben-Zylinder-Einheit (28, 29) entsprechend dem gewünschten Maß der Verstellung der Spindel hin- und herverschieblich ist.

Fig. 1

EP 0 443 160 A2

Die Erfindung betrifft eine Vorrichtung zum Ausführen einer Schnellverstellung von Maschinenteilen o.dgl., vorzugsweise zur Schnellverstellung eines an einen Gegendruckzylinder anstellbaren Formzylinders und/oder einer an einen Formzylinder anstellbaren Farbauftragswalze, mit einer mit dem zu verstellenden Maschinenteil oder dem Gestell drehfest verbundenen Spindel, die in eine Spindelmutter eingeschraubt ist, die an dem Gestell oder an dem zu verstellenden Maschinenteil drehbar aber axial verschieblich gelagert und als Schneckenrad ausgebildet ist, mit dem eine Schnecke kämmt, deren Welle mit einer Betätigungseinrichtung zu deren Verdrehen versehen ist.

Vorrichtungen dieser Art, bei denen die Betätigungseinrichtung vorzugsweise aus einem Handrad besteht, sind bekannt und dienen beispielsweise dazu, durch Verdrehen der Schnecke über die diese tragende Welle einen Formzylinder an einen Gegendruckzylinder und/oder eine Farbauftragswalze an einen Formzylinder anzustellen. Durch Verdrehen der Schneckenwelle mit der Hand lassen sich jedoch nur langsame Stellbewegungen durch verhältnismäßig mühevolle Manipulationen erreichen.

Aufgabe der Erfindung ist es daher, eine Vorrichtung der eingangs angegebenen Art zu schaffen, die mühelos eine schnelle Verstellung der Maschinenteile gestattet.

Erfindungsgemäß wird diese Aufgabe bei einer Vorrichtung der gattungsgemäßen Art dadurch gelöst, daß die Welle drehbar und axial verschieblich in dem das Schneckenrad lagernden Gehäuse oder Gehäuseteil und zusätzlich drehbar aber axial unverschieblich in einen im oder an dem Gehäuse in axialer Richtung der Welle verschieblich geführten Schieber gelagert ist, der von einer Druckmittel-Kolben-Zylindereinheit entsprechend dem gewünschten Maß der Verstellung der Spindel hin und her verschieblich ist. Bei der erfindungsgemäßen Vorrichtung dient somit die von einer Schneckenwelle getragene Schnecke gleichsam als Zahnstange, die durch ihre angetriebene hin- und hergehende Bewegung dem Schneckenrad eine Drehung erteilt, die dann zu der gewünschten Axialverstellung der in das Schneckenrad eingeschraubten Spindel führt. Wird die erfindungsgemäße Schnellverstellvorrichtung zur Verstellung von Formzylindern und/oder Farbauftragswalzen verwendet, kann über diese beispielsweise ein kurzhubige Druckan- und Druckabbewegung der Walzen ausgeführt werden. Trotz der erfindungsgemäßen Schnellverstellvorrichtung bleibt die von Hand oder durch einen Motor zu betätigende Verstellung durch Verdrehen der Schneckenwelle funktionsfähig, so daß durch Verdrehen der Schneckenwelle Feinjustierungen oder weithubigere Bewegungen ausgeführt werden können.

Zweckmäßigerweise ist der Stellweg des Schiebers durch Anschläge begrenzt, so daß im Wege der Schnellverstellung durch die Druckmittelkolbenzylindereinheit immer gleich große Stellwege ausgeführt werden.

Nach einer vorteilhaften Ausgestaltung der Erfindung ist vorgesehen, daß der Schieber mit einer Bremseinrichtung für die an diesem gelagerte Welle versehen ist. Diese Bremseinrichtung ist insbesondere dann zweckmäßig, wenn zwischen der Schnecke und dem Schneckenrad keine Selbsthemmung vorhanden ist. Die Bremskraft wird so eingestellt, daß sich einerseits die Schneckenwelle in der gewünschten Weise verdrehen läßt, andererseits aber eine Selbsthemmung gewährleistet ist, wenn die Schneckenwelle durch die Druckmittelkolbenzylindereinheit verstellt wird. Durch entsprechende Selbsthemmung oder zusätzliche Bremswirkung ist sichergestellt, daß die Schnecke praktisch die Funktion einer Zahnstange hat, ohne aufgrund der Steigung der Schneckengänge verdreht zu werden, was den erreichbaren Stellweg im Wege der Schnellverstellung in unkontrollierbarer Weise verändern würde.

Nach einer weiteren vorteilhaften Ausgestaltung ist vorgesehen, daß in einem Gehäuse parallel zueinander zwei Spindeln angeordnet sind und das Gehäuse mit einem einen Formzylinder tragenden Schlitten verbunden ist, der auf einer Konsole o.dgl. einer Druckmaschine längsverschieblich geführt ist, und daß die eine Spindel fest mit der Konsole o.dgl. und die andere fest mit einem Farbzylinderschlitten verbunden ist, der auf dem Formzylinderschlitten längsverschieblich geführt ist.

Ein Ausführungsbeispiel der Erfindung wird nachstehend anhand der Zeichnung näher erläutert. In dieser zeigt

Fig.1    eine Seitenansicht von Schlittenführungen eines an einen Gegendruckzylinder anstellbaren Formzylinders und einer an diesen anstellbaren Farbauftragswalze mit Spindeltrieben zum Verfahren der Formzylinder- und Farbauftragswalzenschlitten und

Fig.2    einen Schnitt längs der Linie II-II in Fig. 1 durch die obere Hälfte des Gehäuses mit den Antriebseinrichtungen für die Spindeln.

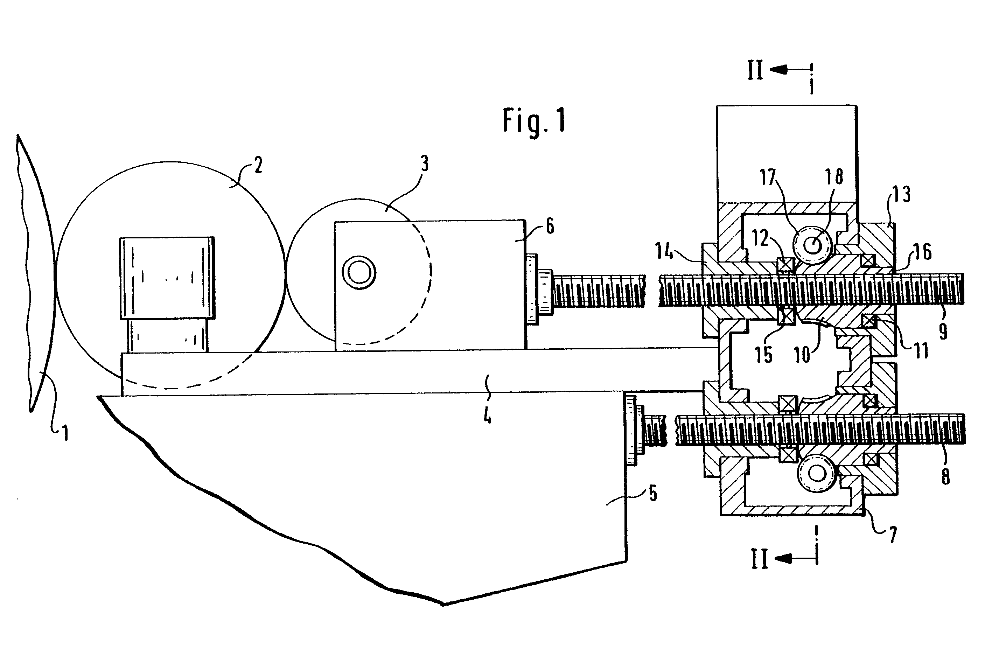

Fig. 1 zeigt einen Teil eines Gegendruckzylinders 1 beispielsweise einer Flexodruckmaschine, an den der Formzylinder 2 anstellbar ist. Gegen den Formzylinder 2 ist die Farbauftragswalze 3 anstellbar, wobei der Formzylinder 2 und die Farbauftragswalze 3 durch die diese tragende Schlitten 4, 6 für sich allein oder auch gemeinsam verfahrbar sind.

Der Formzylinder 2 ruht dabei auf einem Schlitten 4, der verschiebbar auf einer rahmenfesten Konsole 5 geführt ist. Auf den Schlitten 4 wiederum ist ein Lagerbock 6 aufgesetzt, der die Farbauftragswalze 3 trägt und welcher ebenfalls verschiebbar auf dem Schlitten geführt ist. Mit dem Schlitten 4 ist ein Gehäuse 7 fest verbunden, das von zwei Gewindestangen 8 und 9 zumindest teilweise durchsetzt ist. Die linken Ende der Geindestangen 8 und 9 sind mit der rahmenfesten Konsole 5 bzw. dem Lagerbock 6 fest verbunden. Da beide Gewindestangen 8 und 9 in derselben Weise im Gehäuse 7 gelagert sind, wird nur die Lagerung der oberen Gewindestange 9 im folgenden weiter beschrieben.

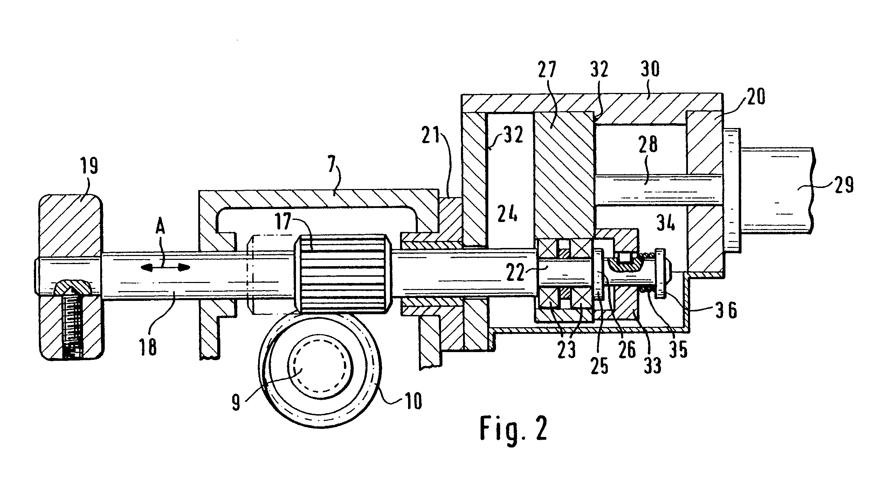

Innerhalb des Gehäuses 7 ist auf die Gewindestange 9 ein Schneckenrad 10 aufgesetzt, welches ein Innengewinde aufweist, welches mit dem Außengewinde der Gewindestange 9 kämmt. Beidseits des Schneckenrades 10 ist ein Lager 11 bzw. 12 vorgesehen, wobei sich das Lager 11 an dem Lagerdeckel 13 und das Lager 12 an dem dem Lagerdeckel 13 gegenüberliegenden Lagerdeckel 14 abstützt. Das Lager 12 ist dabei auf einen Ansatz 15 des Lagerdeckels 14 und das Lager 11 auf einen Ansatz 16 des Schneckenrades 10 aufgesetzt. In das Schneckenrad 10 greift von außen eine Schnecke 17 ein, die mit der Welle 18 fest verbunden ist. Diese Welle 18 ragt zu beiden Enden aus dem Gehäuse 7 heraus, wobei auf das in Figur 2 dargestellte linke Ende das Handrad 19 fest aufgesetzt ist. Das auf der rechten Seite der Figur 2 aus dem Gehäuse 7 hervorragende Ende der Welle 18 ragt in ein weiteres Gehäuse 20 hinein, welches über einen Verbindungsflansch 21 fest mit dem Gehäuse 7 verbunden ist.

Das in das Gehäuse 20 hineinragende Ende der Welle 18 weist einen abgedrehten Teil 22 auf, auf das Lager 23 aufgesetzt sind. Diese Lager stützen sich zum einen an dem Bund 24 und zum anderen an dem Klemmring 25 ab, dessen Lage auf dem abgedrehten Teil 22 der Welle 18 durch eine Schraube 26 fixiert ist. Die Lager 23 sind in die Bohrung eines Mitnehmers 27 eingepreßt worden, wobei der Mitnehmer 27 fest an der Kolbenstange 28 einer Kolbenzylindereinheit 29 befestigt ist. Letztere ist mit dem Gehäuse 20 fest verschraubt, welches eine Durchgangsbohrung für die Kolbenstange 28 aufweist. Das Gehäuse 20 ist von oben her mit einem Deckel 30 abgedeckt, wobei dieser Deckel einen Ansatz 31 aufweist, gegen den der Mitnehmer 27 durch die Kolbenzylindereinheit 29 gehalten ist. Den linksseitigen Anschlag für den Mitnehmer 27 bildet die Innenwand 32 des Gehäuses 20. Um nun die Farbauftragswalze 3 vom Formzylinder 2 ab- bzw. auf diesen hinzubewegen, wird die Kolbenzylindereinheit 29 betätigt, woraufhin sich die Welle 18 in Pfeilrichtung A bewegt. Im Falle der Figur 2 würde sich die Welle 18 folgedessen nach links bewegen, und zwar soweit, bis der Mitnehmer 27 an der Wand 32 des Gehäuses 20 anliegt. Die Schnecke 17 nähme dann die mit strichpunktierten Linien dargestellte Lage ein. Das Schneckenrad 10 wäre in dieser Lage um einen bestimmten Winkelbeetrag im Gegenuhrzeigersinn verdreht und hätte, weil das Schneckenrad 10 mit seinem Innengewinde in das Außengewinde der Gewindestange 9 eingreift, auch diese um einen gewissen Betrag verschoben. Der Handhebel 19 dient lediglich noch der Feineinstellung. Damit nun tatsächlich auch bei der Bewegung der Welle 18 in Achsrichtung die Schnecke 17 das Schneckenrad 10 dreht und sich nicht auf dieser drehend abwälzt, ist auf den rechten abgedrehten Teil der Welle 18 eine Topfbremse 33 aufgesetzt, die sich mit ihrer ringförmigen Fläche an dem Mitnehmer 27 abstützt. Die Topfbremse 33 ist über eine Paßfeder 34 drehfest mit dem abgedrehten Teil 22 verbunden. Die Anpreßkraft der Topfbremse 33 an den Mitnehmer 27 wird über eine Druckfeder 35 bestimmt, die über die Mutter 36 mehr oder weniger vorgespannt werden kann. Die Mutter 36 ist auf ein nicht dargestelltes Gewinde aufgeschraubt, das in das rechtsseitige Ende des abgedrehten Teils 22 eingebracht ist.

Der in Figur 2 dargestellte Teil betrifft die Verstellung der Gewindestange 9, wohingegen die Teile, die die Verstellung der Gewindestange 8 bewirken, nicht dargestellt sind. Diese schließen sich, bezogen auf Figur 2, nach unten hin spiegelbildlich an und sollen aus diesem Grunde nicht nochmals beschrieben werden.

Der Schlitten 4 des Formzylinders 2 und der Schlitten oder Lagerbock 6 der Farbauftragswalze 3 lassen sich auch jeweils durch Drehen der Spindelwellen 18 über die Handräder 19 verstellen.

Ein besonderer Vorteil der erfindungsgemäßen Vorrichtung besteht darin, daß sich auch nur durch ein Handrad 19 betätigbare Spindeltriebe nachrüsten lassen. zum Zwecke der Nachrüstung ist es lediglich erforderlich, die Spindelwelle 18 in dem Gehäuse axial verschieblich zu lagern und an das Gehäuse das Gehäuse 20 mit der Schnellverstellvorrichtung anzuflanschen.

## Patentansprüche

1. Vorrichtung zum Ausführen einer Schnellverstellung von Maschinenteilen o. dgl., vorzugsweise zur Schnellverstellung eines an einen Gegendruckzylinder anstellbaren Formzylinders und/oder einer an einen Formzylinder anstellbaren Farbauftragswalze, mit einer mit dem zu verstellenden Maschinenteil oder dem gestelldrehfest verbundenen Spindel, die in eine Spindelmutter eingeschraubt ist, die an dem Gestell oder dem zu verstellenden Maschinenteil drehbar aber axial unverschieblich gelagert und als Schneckenrad ausgebildet ist, mit dem eine Schnecke kämmt, deren Welle mit einer Betätigungseinrichtung zu deren Verdrehen versehen ist,

**dadurch gekennzeichnet,**

daß die Schneckenwelle (18) drehbar und axial verschieblich in dem das Schneckenrad (10) lagernden Gehäuse (7) oder Gehäuseteil und zusätzlich drehbar aber axial unverschieblich in einem in oder an dem Gehäuse (7,20) in axialer Richtung der Schneckenwelle (18) verschieblich geführten Schieber (27) gelagert ist, der von einer Druckmittel-Kolben-Zylinder-Einheit (28,29) entsprechend dem gewünschten Maß der Verstellung der Spindel hin- und herverschieblich ist.

2. Vorrichtung nach Anspruch 1, dadurch gekennzeichnet, daß der Stellweg des Schiebers (27) durch Anschläge (31,32) begrenzt ist.

3. Vorrichtung nach Anspruch 1 oder 2, dadurch gekennzeichnet, daß der Schieber (27) mit einer Bremseinrichtung (33-36) für die an diesem gelagerte Welle (18) versehen ist.

4. Vorrichtung nach einem der Ansprüche 1-4, dadurch gekennzeichnet, daß in einem Gehäuse (7) parallel zueinander zwei Spindeln (18) angeordnet sind und das Gehäuse (7) mit einem einen Formzylinder (2) tragenden Schlitten (4) verbunden ist, der auf einer Konsole (5) o.dgl. einer Druckmaschine längsverschieblich geführt ist und daß die eine Spindel (8) fest mit der Konsole o.dgl. und die andere (9) fest mit einem Farbzylinderschlitten (6) verbunden ist, der auf dem Formzylinderschlitten (4) längsverschieblich geführt ist.

Fig.1

Fig. 2